# EUROPÄISCHE PATENTANMELDUNG

(11) **EP 2 604 474 A1**
(43) Veröffentlichungstag der Anmeldung: **19.06.2013**
(21) Anmeldenummer: 12196552.9
(22) Anmeldetag: 11.12.2012
(51) Int. Cl.: B60R 11/02, B60Q 5/00, E05F 15/00

(54) **Fahrzeug zur öffentlichen Personenbeförderung mit Soundmodul**

(30) Priorität: 14.12.2011 DE 102011120928
(71) Anmelder: Gebr. Bode GmbH & Co. KG, 34123 Kassel (DE)
(72) Erfinder: Hamberger, Harry, 34266 Niestetal (DE)
(74) Vertreter: Bauer Vorberg Kayser Patentanwälte

(57) **Zusammenfassung**

Die Erfindung betrifft ein Fahrzeug (10) zur öffentlichen Personenbeförderung, umfassend wenigstens einen Türbereich (11) mit einer beweglich angetriebenen Tür (12:12'). Dabei ist im Türbereich (11) wenigstens ein Lautsprecher (20;20';20ⁿ) angebracht, der in Verbindung mit einer Steuereinheit (30) steht, wobei die Steuereinheit (30) zur akustischen Wiedergabe eines Soundelementes über den Lautsprecher (20;20';20ⁿ) ausgebildet ist und der Lautsprecher (20;20';20ⁿ) so in ein Bauteil des Fahrzeugs (10) integriert ist, dass das Bauteil bei der akustischen Wiedergabe eines Soundelementes durch den Lautsprecher (20;20';20ⁿ) wenigstens bereichsweise als Resonanzkörper wirkt.

## Beschreibung

Die Erfindung betrifft ein Fahrzeug zur öffentlichen Personenbeförderung, umfassend wenigstens einen Türbereich mit einer beweglich angetriebenen Tür.

Bei Fahrzeugen mit beweglich angetriebenen Türen, wie sie beispielsweise in Bussen oder Schienenfahrzeugen für die öffentliche Personenbeförderung eingesetzt werden, werden oftmals Warntöne eingesetzt, um Personen insbesondere vor dem Öffnen und Schließen einer Tür zu warnen, damit es dabei zu keinen Störungen im Betrieb des jeweiligen Fahrzeugs oder sogar Verletzungen von Personen kommt. Auch die Bewegung beispielsweise von Schiebetritten oder absenkbaren Stufen wird typischerweise durch Warntöne eingeleitet, damit Personen nicht auf den jeweiligen Zutrittselementen stehen oder Gepäck darauf abgestellt haben, wenn sich diese bewegen.

Derartig eingesetzte Warntöne werden typischerweise durch Buzzer bzw. Summer erzeugt, bei denen es sich um elektrisch angesteuerte akustische Signalgeber handelt, die einen Summ- oder Piepton erzeugen. Dabei haben die Buzzer eine definierte Lautstärke und die Art des Tons ist für jeden Buzzer ebenfalls fest vorgegeben. Allerdings können auch Sounder eingesetzt werden, bei denen bei der Installation zwischen mehreren Tönen gewählt werden kann. Auch die Lautstärke eines abzugebenden Tons kann so einmalig eingestellt werden. Kurzfristige Änderungen dieser Einstellungen sind jedoch üblicherweise nicht möglich, so dass ein einmal eingestellter Ton bzw. Parameter für verschiedenste Situationen geeignet sein muss, was nicht immer der Fall ist.

Wählbare Töne können beim Betrieb von Fahrzeugen zur öffentlichen Personenbeförderung beispielsweise von Bedeutung sein, wenn für verschiedene Szenarien an einer Tür unterschiedliche Töne ertönen sollen. So kann das Öffnen oder Schließen einer Tür von einem anderen Ton eingeleitet werden als dies der Fall ist, wenn Sensoren detektieren, dass sich eine Person oder ein Gegenstand auf einem Zutrittselement befinden, das bewegt werden soll.

Auch eine variabel einstellbare Lautstärke kann von Vorteil sein, wenn ein Fahrzeug beispielsweise tagsüber relativ laute Warntöne verwenden muss, um einen hohen Geräuschpegel innerhalb und außerhalb des Fahrzeugs zu übertönen, während dies nachts nicht zwingend erforderlich ist. Vielmehr können dann sehr laute Warntöne beispielsweise beim Schließen einer Tür für Anwohner in der Nähe einer Haltestelle sehr störend sein.

Aufgabe der Erfindung ist es daher, ein Fahrzeug für die öffentliche Personenbeförderung mit einem möglichst flexibel einsetzbaren Soundmodul bereitzustellen, bei dem akustisch wiederzugebende Soundelemente kurzfristig änderbar und einstellbar sind.

Erfindungsgemäß wird diese Aufgabe durch ein Fahrzeug gemäß dem unabhängigen Anspruch 1 gelöst. Vorteilhafte Weiterbildungen des Fahrzeugs ergeben sich aus den Unteransprüchen 2-15.

Das erfindungsgemäße Fahrzeug zur öffentlichen Personenbeförderung umfasst wenigstens einen Türbereich mit einer beweglich angetriebenen Tür, wobei in diesem Türbereich wenigstens ein Lautsprecher angebracht ist, der in Verbindung mit einer Steuereinheit steht, wobei die Steuereinheit zur akustischen Wiedergabe eines Soundelementes über den Lautsprecher ausgebildet ist und der Lautsprecher so in ein Bauteil des Fahrzeugs integriert ist, dass das Bauteil bei der akustischen Wiedergabe eines Soundelementes durch den Lautsprecher wenigstens bereichsweise als Resonanzkörper wirkt.

Das für die Erfindung verwendete Soundmodul besteht somit aus wenigstens einem Lautsprecher und einer Steuereinheit. Dabei kann die Steuereinheit eine separate Einheit sein, sie kann aber auch in die Türsteuerung der wenigstens einen Tür des Fahrzeugs integriert werden. So kann die Türsteuerung beispielsweise zur Ansteuerung der Öffnungs- und Schließvorgänge der Tür, aber gleichzeitig auch zur akustischen Wiedergabe eines Soundelementes durch den Lautsprecher ausgestaltet sein. Die Steuereinheit kann jedoch auch unabhängig von der Türsteuerung ausgebildet sein und dann beispielsweise lediglich Informationen wenigstens über die Öffnungs- und Schließvorgänge der Tür von der Türsteuerung erhalten.

Ferner ist der Lautsprecher erfindungsgemäß so in ein Bauteil des Fahrzeugs integriert, dass das Bauteil bei der akustischen Wiedergabe eines Soundelementes durch den Lautsprecher wenigstens bereichsweise als Resonanzkörper wirkt. Eine solche flächige Abgabe des Tons ist dabei gegenüber herkömmlichen Lösungen von Vorteil, da ein Ton bei üblicherweise eingesetzten Soundmodulen konzentriert abgegeben wird, was in direkter Ohrnähe zu laut sein kann. Ferner hat diese Vorgehensweise den Vorteil, dass beispielsweise in einer Tür oder einer Fahrzeugwand nicht zwei Lautsprecher angebracht werden müssen, um Soundelemente akustisch nach innen und außen abgeben zu können, sondern ein einzelner Lautsprecher kann entsprechend so in ein Bauteil integriert werden, dass seine Wirkung als Resonanzkörper zu einer akustischen Abgabe des Soundelementes nach innen und außen führt.

In einem Ausführungsbeispiel der Erfindung weist die Steuereinheit darüber hinaus Mittel zur Einstellung wenigstens eines Parameters für die akustische Wiedergabe des Soundelementes über den Lautsprecher auf. Vorzugsweise ist dieser Parameter die Lautstärke, so dass ein Soundelement mit unterschiedlichen Lautstärken ausgegeben werden kann. Es können jedoch auch weitere Parameter wie eine Tondauer, eine Tonhöhe und/oder die Wiederholungsrate für einen Ton eingestellt werden.

Bei einem Soundelement kann es sich beispielsweise um einen Ton, eine Tonfolge und/oder eine Sprachmitteilung handeln, so dass die Art des auszugebenden Soundelementes frei wählbar und auch an die jeweiligen Anforderungen bzw. Situationen in einem Fahrzeug anpassbar ist. Die Steuereinheit weist dann vorzugsweise Mittel zur Auswahl und/oder Erzeugung von wenigstens zwei unterschiedlichen Soundelementen für die akustische Wiedergabe über den Lautsprecher auf. Die Steuereinheit kann die unterschiedlichen Soundelemente dazu selbst erzeugen oder auf hinterlegte Soundelemente zurückgreifen. Bei selbst erzeugten Soundelementen kann es sich insbesondere um einzelne Frequenzen handeln, die beispielsweise von einem MP3-Decoder-Baustein erzeugt werden, wobei auf diese Weise jedoch unter Umständen keine komplexeren Töne erzeugt werden können.

Greift die Steuereinheit dagegen auf hinterlegte Soundelemente zurück, kann sie dazu beispielsweise in Verbindung mit einer Speichereinheit stehen, in der wenigstens ein Soundelement zur akustischen Wiedergabe über den Lautsprecher hinterlegt ist. Vorzugsweise sind in der genannten Speichereinheit wenigstens zwei unterschiedliche Soundelemente hinterlegt, und die Steuereinheit weist Mittel zur selektiven Auswahl eines Soundelementes für die akustische Wiedergabe über den Lautsprecher auf. Insbesondere kann das jeweilige Soundelement als Audiodatei in der Speichereinheit hinterlegt sein, was beispielsweise über Dateien im mp3-Format erfolgen kann. Diese Dateien können frei gestaltet und dann in der Speichereinheit hinterlegt werden, um sie dann zum Beispiel mittels eines MP3-Decoder-Bausteins über einen Lautsprecher ausgeben zu können.

Insbesondere ist die Steuereinheit zur selektiven Auswahl und/oder Erzeugung eines Soundelementes wenigstens in Abhängigkeit von Zustandssignalen der wenigstens einen Tür ausgestaltet. Verschiedenen Zustandssignalen sind dann jeweilige Soundelemente zugeordnet, die von der Steuereinheit abgerufen bzw. selbst erzeugt werden können. Die Zustandssignale können beispielsweise von der Türsteuerung erzeugt werden, so dass bei oder vor dem Öffnen der Tür ein Öffnungssignal erzeugt und an die Steuereinheit übermittelt wird, damit diese das diesem Zustandssignal zugeordnete Soundelement ausgeben kann. Beim Schließen der Tür wird dagegen ein Schließsignal erzeugt und an die Steuereinheit übermittelt, um den entsprechenden Warnton für den Schließvorgang auszugeben. Ist die Steuereinheit zur akustischen Wiedergabe von Soundelementen bereits in die Türsteuerung integriert, können die erforderlichen Informationen über die Vorgänge an der Tür der Steuereinheit ohne zusätzliche Signale vorliegen.

Beim Öffnen und Schließen können somit unterschiedliche Töne erklingen, es kann jedoch auch vorgesehen sein, dass ein Öffnungssignal den gleichen Warnton abruft wie ein Schließsignal. Ferner können auch Sprachmitteilungen ausgegeben werden, welche beispielsweise explizit auf das Problem hinweisen, wenn sich eine Person oder ein Gegenstand auf einem Zutrittselement befinden, das bewegt werden soll. Darüber hinaus können nicht nur Warntöne oder Warnmeldungen ausgegeben werden, sondern das Soundmodul kann auch dazu genutzt werden, Fehler- und/oder Servicemeldungen auszugeben. Auch Mitteilungen in unterschiedlichen Sprachen können hinterlegt werden.

Die Anbringung wenigstens eines Lautsprechers an bzw. in einem Fahrzeug zur öffentlichen Personenbeförderung kann auf unterschiedliche Arten erfolgen, wobei dabei insbesondere die vorhandenen Platzverhältnisse berücksichtigt werden können. Vorzugsweise befindet sich ein Lautsprecher so im Bereich eines Türbereiches, dass Personen in diesem Bereich ein über den Lautsprecher erklingendes Soundelement der jeweiligen Tür zuordnen können. Beispielsweise kann der Lautsprecher dazu in ein Türblatt der wenigstens einen Tür, in eine Wand des Fahrzeugs, in eine Voutenklappe, in eine Türsteuerung oder in einen Antrieb der Tür integriert sein.

Ferner kann der Lautsprecher nicht sichtbar in ein Bauteil, aber insbesondere in ein Türblatt oder eine Wand des Fahrzeugs integriert sein. So ist der Lautsprecher besonders gut gegen Beschädigungen und/oder Wettereinflüsse geschützt und steht beispielsweise im Außenbereich des Fahrzeugs nicht der Anbringung von Aufdrucken, etc. entgegen.

Ist der Lautsprecher direkt in ein Türblatt der Tür integriert, erfolgt dies in einem Ausführungsbeispiel der Erfindung so, dass das Türblatt bei der akustischen Wiedergabe eines Soundelementes wenigstens bereichsweise als Resonanzkörper wirkt. Dazu kann das Türblatt beispielsweise zwei voneinander beabstandete Türbleche aufweisen, zwischen denen der Lautsprecher so angebracht ist, dass er direkten Kontakt zu wenigstens einem Türblech hat. Vorzugsweise hat er jedoch Kontakt zu beiden Türblechen, so dass das Soundelement akustisch nach innen und außen abgegeben werden kann, da beide Türbleche als Resonanzkörper wirken.

Die Steuereinheit könnte optional in Verbindung mit Eingabemitteln zur Programmierung der Steuereinheit stehen. Hierbei handelt es sich beispielsweise um eine Tastatur, einen Touch-Screen, Schalter, Tasten, Schieberegler, etc. die dazu genutzt werden können, um Soundelemente auszuwählen und/oder deren Parameter einzustellen. Über ein solches Eingabemittel kann eine Person bei der Installation des Soundmoduls die gewünschten Soundelemente für die verschiedenen Szenarien an der Tür festlegen. Dies könnte auch Parameter wie die Lautstärke umfassen, so dass beispielsweise programmiert werden könnte, dass tagsüber zwischen bestimmten Uhrzeiten laute Töne und Meldungen erklingen, während die Lautstärke nachts zwischen anderen Uhrzeiten geringer ist. Es kann jedoch auch vorgesehen sein, dass dieser Wechsel in der Lautstärke manuell durch einen Fahrer des Fahrzeugs auslösbar ist, so dass beispielsweise ein Schalter bedient werden muss, um von Tagbetrieb auf Nachtbetrieb und umgekehrt zu schalten. Auch kann vorgesehen sein, dass die Lautstärke vom Fahrer völlig frei durch Bewegung eines Lautstärkereglers eingestellt werden kann, so dass er die Lautstärke zum Beispiel erhöhen kann, wenn das Fahrzeug nach Veranstaltungen sehr voll und der Geräuschpegel daher eher hoch ist. Die Lautstärke könnte so frei an die jeweiligen Anforderungen angepasst werden.

Die Eingabemöglichkeiten sind jedoch in keiner Weise auf die beschriebenen Beispiele beschränkt, sondern die genannten oder andere Eingabemittel können auf beliebige Weise dazu genutzt werden, um die Art des auszugebenden Soundelements und/oder Parameter des Soundelements einzustellen.

In einem bevorzugten Ausführungsbeispiel der Erfindung erfolgt die Parametrisierung von auszugebenden Soundelementen über eine Datenbusanbindung. Auch die Hinterlegung der einzelnen Soundelemente in einer Speichereinheit kann auf diesem Wege erfolgen.

In einem weiteren Ausführungsbeispiel der Erfindung ist die Steuereinheit mit einer Servicekomponente verbindbar, in welcher wenigstens Informationen über den Zustand einer Tür vorliegen, und die Steuereinheit weist Mittel zur selektiven Auswahl und/oder Erzeugung eines Soundelementes für die akustische Wiedergabe über den Lautsprecher in Abhängigkeit von diesen Zustandsinformationen auf. Bei den Zustandsinformationen kann es sich beispielsweise um Informationen über den Wartungsstatus einer Tür handeln. Es kann sich aber auch um Informationen über Fehler und/oder Reparaturbedarf an der jeweiligen Tür handeln.

Diese Zustandsinformationen können durch Sensoren oder sonstige Detektionsmittel erzeugt und in der Servicekomponente hinterlegt werden, wobei die Servicekomponente in die Steuereinheit integriert sein kann oder losgelöst von dieser betrieben wird. Somit kann es sich bei der Verbindung zwischen der Servicekomponente und der Steuereinheit auch um eine permanente oder temporäre Verbindung handeln. Insbesondere kann die Servicekomponente auch wie die Steuereinheit in die Türsteuerung integriert sein.

Beispielsweise kann von einem Sensor erfasst werden, dass die Tür geölt werden muss oder nicht mehr vorschriftsmäßig schließt. Wenn ein Servicetechniker eine Wartung der Türen eines Fahrzeugs vornimmt, kann er den aktuellen Zustand der jeweiligen Tür abrufen. Dazu kann sich der Servicetechniker direkt vor die Tür stellen und der zu der Tür gehörige Lautsprecher gibt den Zustand dieser Tür akustisch aus. Dazu wurden zuvor in der Speichereinheit für alle möglichen Fehler- oder Wartungsmeldungen entsprechende Sprachmitteilungen hinterlegt, die dann in Abhängigkeit von dem jeweiligen Zustand der Tür ausgegeben werden. So kann der Servicetechniker auf einfache Weise nacheinander alle Türen abgehen, den jeweiligen Zustand abrufen und die entsprechenden Maßnahmen einleiten.

In einem Ausführungsbeispiel der Erfindung weist das Fahrzeug mehrere Lautsprecher auf, die in einem jeweiligen Türbereich angeordnet sind, wobei die Lautsprecher insbesondere alle in Verbindung mit der gleichen Steuereinheit stehen können und die Steuereinheit in diesem Fall Mittel zur selektiven Ansteuerung der einzelnen Lautsprecher aufweisen kann. Die Steuereinheit kann so eine Vielzahl von Lautsprechern ansteuern, wobei durch jeden Lautsprecher ein anderes Soundelement ausgegeben werden kann. Diese Ausführungsform kann insbesondere gewählt werden, wenn die Steuereinheit nicht in die Türsteuerung einer Tür integriert, sondern als separate Steuereinheit ausgebildet ist, welche so die Ansteuerung von mehreren Lautsprechern übernehmen kann. Insbesondere kann dabei vorgesehen sein, dass die Steuereinheit Mittel zur selektiven Wiedergabe eines Soundelementes über den Lautsprecher im Türbereich derjenigen Tür aufweist, deren Zustandsinformationen bei der Auswahl des Soundelementes verwendet wurden. Je nachdem, welche Tür der Servicetechniker abfragt, kann so eine andere Mitteilung ausgegeben werden.

Die akustische Wiedergabe eines Soundelementes über wenigstens einen Lautsprecher kann dabei grundsätzlich auf verschiedene Arten auslösbar sein. Beispielsweise kann sie manuell auslösbar sein, wenn ein Servicetechniker beispielsweise den Zustand einer Tür abfragen möchte. Dann löst der Servicetechniker über die Steuereinheit oder ein daran angeschlossenes Wartungsgerät wie ein tragbares Handheld die akustische Wiedergabe eines oder mehrerer Soundelemente aus. Das Wartungsgerät kann so von einem Servicetechniker dazu genutzt werden, um der Steuereinheit ein Signal zur akustischen Wiedergabe von Zustandsinformationen zu der jeweiligen Tür zu übermitteln.

Dabei können auch eine weitergehende Kommunikation oder sogar ein Datenaustausch zwischen der Steuereinheit und dem Wartungsgerät erfolgen, so dass die Steuereinheit insbesondere zur Übermittlung der Zustandsinformationen der Tür an das Wartungsgerät ausgestaltet ist. Diese Übermittlung kann beispielsweise durch geeignete Schnittstellen wie USB-Schnittstellen und/oder Funkverbindungen stattfinden.

Die Wiedergabe kann jedoch auch automatisiert durch ein von dem Fahrzeug erzeugtes Zustandssignal auslösbar sein. Dies ist beispielsweise der Fall, wenn Warntöne automatisiert ausgegeben werden, wenn sich eine Tür öffnet oder schließt. Das Fahrzeug bzw. eine Türsteuerung erzeugt dann vor dem jeweiligen Vorgang ein Zustandssignal, welche die akustische Wiedergabe eines bestimmten Soundelementes auslöst.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine schematische Darstellung des Türbereiches eines Ausführungsbeispiels eines erfindungsgemäßen Fahrzeugs zur öffentlichen Personenbeförderung mit Verbindung zu einer Steuereinheit; und
- Fig. 2: eine Detailansicht eines Lautsprechers innerhalb eines Türblatts.

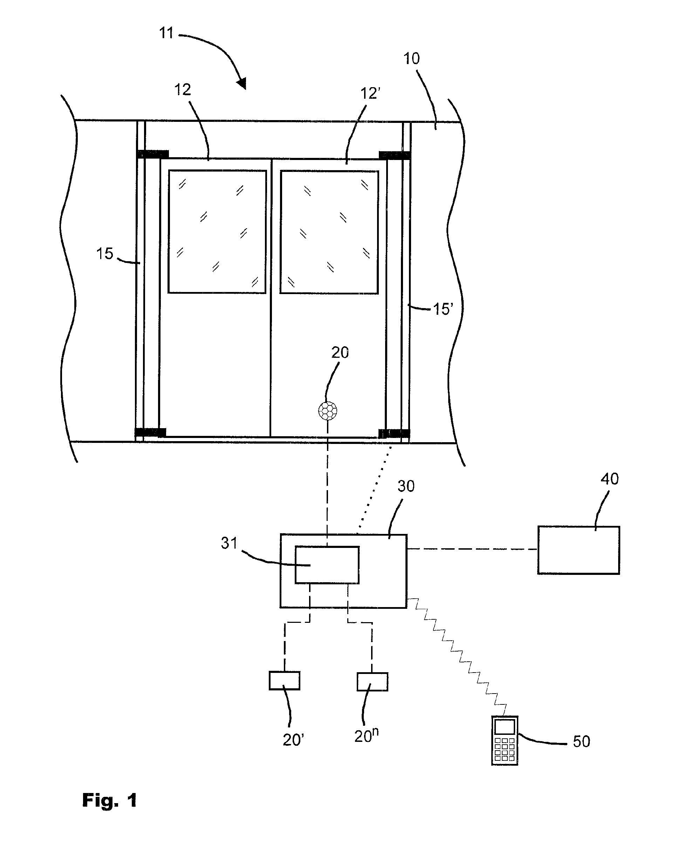

Der schematischen Darstellung der Fig. 1 ist eine Teilansicht eines Ausführungsbeispiels eines erfindungsgemäßen Fahrzeugs zur öffentlichen Personenbeförderung zu entnehmen. Bei dem Fahrzeug 10 handelt es sich beispielsweise um einen Bus, ein Schienenfahrzeug oder ein spurgeführtes Landverkehrsmittel wie eine Magnetschwebebahn.

Dabei ist ein Abschnitt des Innenraumes des Fahrzeugs 10 gezeigt, der einen Türbereich 11 mit zwei Türen 12 und 12' umfasst. Dieser Türbereich 11 beinhaltet ferner Antriebsmittel zum Schließen und Öffnen der Türen, wobei hierfür in dem dargestellten Ausführungsbeispiel lediglich beispielhaft angetriebene Drehsäulen 15 und 15' vorgesehen sind, die an den Seiten der beiden Türen 12, 12' angeordnet sind. Die Türen 12, 12' können dabei beispielsweise als Schwenkschiebetüren ausgebildet sein, die beim Öffnen von einem nicht dargestellten Antrieb erst leicht nach außen und dann parallel entlang der Außenseite des Fahrzeugs 10 bewegt werden können. Beim Schließen der Türen erfolgt dieser Vorgang in umgekehrter Reihenfolge. Die Bewegung der Türen 12, 12' kann jedoch auch auf beliebige andere geeignete Art erfolgen. Ferner kann auch nur eine einzelne Tür pro Türbereich vorgesehen sein.

Im Türbereich 11 ist wenigstens ein Lautsprecher angeordnet, wobei in diesem Ausführungsbeispiel ein Lautsprecher 20 in die rechte Tür 12' integriert ist. Der Lausprecher 20 ist dabei im unteren Bereich des zugehörigen Türblatts angebracht. Er kann jedoch auch im mittleren oder oberen Bereich des Türblatts angebracht werden, wo er unter Umständen gegenüber Beschädigungen oder sogar Vandalismus besser geschützt wäre. Ferner könnte der Lautsprecher 20 auch in die Außenwand oder die Decke des Fahrzeugs 10 integriert sein, solange er sich im Türbereich 11 befindet und Personen die von dem Lautsprecher 20 abgegebenen akustischen Meldungen dem jeweiligen Türbereich zuordnen können. Beispielsweise könnte auch die Integration eines Lautsprechers in eine Voutenklappe vorteilhaft sein.

Dabei können die Lautsprechermembran des Lautsprechers 20 bzw. eine Schutzabdeckung der Membran aus dem Türblatt der Tür 12' herausragen, so dass sie sichtbar ist. Ein derartiger Aufbau erhöht jedoch das Risiko von Beschädigungen des Lautsprechers, so dass dieser vorzugsweise so in die Tür integriert ist, dass seine Komponenten nicht ohne Weiteres zugänglich sind. Beispielsweise kann er dazu hinter einem Türblech angeordnet werden, wobei der Lautsprecher insbesondere so in einen Türflügel integriert sein kann, dass er nicht sichtbar ist.

Der Lautsprecher 20 steht in Verbindung mit einer Steuereinheit 30, die zur Erzeugung und/oder Auswahl von Soundelementen ausgebildet ist. Sie kann somit einfache Soundelemente selbst erzeugen und/oder hinterlegte Soundelemente aus einer Speichereinheit abrufen. In dem in der Fig. 1 dargestellten Ausführungsbeispiel ist eine solche Speichereinheit 30 vorgesehen, in der wenigstens ein Soundelement zur akustischen Wiedergabe über den Lautsprecher 20 hinterlegt ist. Der Lautsprecher 20 steht somit indirekt auch in Verbindung mit der Speichereinheit 31. Dies schließt jedoch nicht aus, dass die Steuereinheit 30 ergänzend dazu auch selbst unterschiedliche einfache Töne erzeugen kann.

Die Verbindung zwischen dem Lautsprecher 20 und der Steuereinheit 30 bzw. der Speichereinheit 31 ist in der Fig. 1 nur gestrichelt dargestellt, da die Steuereinheit 30 grundsätzlich an beliebigen Positionen im Fahrzeug 10 angeordnet sein kann. Beispielsweise befindet sie sich in einer Fahrerkabine. Die genannten Komponenten können jedoch auch innerhalb des Fahrzeugs in einer Art Serviceschrank untergebracht sein, der für Servicetechniker und/oder das Fahrpersonal zugänglich ist.

In einer besonders bevorzugten Ausführungsform der Erfindung ist die Steuereinheit 30 jedoch in die Türsteuerung integriert, die auch die Öffnungs- und Schließvorgänge der Türen 12, 12' ansteuert. Daher ist eine Verbindung zwischen der Steuereinheit 30 (Türsteuerung) und den Drehsäulen 15 und 15' in Fig. 1 mit einer gepunkteten Linie dargestellt.

Ferner können an die Steuereinheit 30 und somit auch an die Speichereinheit 31 weitere Lautsprecher 20' ... 20ⁿ angeschlossen sein, die an anderen Positionen am Fahrzeug 10 positioniert sind. Hierdurch kann die Steuereinheit 30 als zentrale Ansteuerung mehrerer Lautsprecher dienen, wobei beispielsweise ein Soundelement über alle Lautsprecher 20, 20' ... 20ⁿ gleichzeitig ausgegeben werden kann. Es kann jedoch auch vorgesehen sein, dass die Steuereinheit selektiv unterschiedliche Soundelemente über die einzelnen Lautsprecher 20, 20' ... 20ⁿ ausgibt. Diese Ausführungsform ist vorteilhaft, wenn die Steuereinheit nicht in die Türsteuerung einer einzelnen Tür integriert ist, sondern als zentrale Komponente für mehrere Türen verwendet werden kann.

Bei den gespeicherten Soundelementen kann es sich um unterschiedliche Arten von Klängen, Tönen, Geräuschen, etc. handeln. Insbesondere können Warntöne und/oder Textnachrichten eingesetzt werden, die über den/die Lautsprecher ausgegeben werden. Dabei sind vorzugsweise mehrere unterschiedliche Töne und/oder Textnachrichten in der Speichereinheit 31 hinterlegt, so dass über die Steuereinheit 30 gewählt und somit auch frei programmiert werden kann, welcher Ton bzw. welche Textnachricht in welcher Situation im jeweiligen Türbereich ausgegeben werden soll. Vorzugsweise ist ferner vorgesehen, dass auch die Lautstärke des auszugebenden Soundelementes über die Steuereinheit 30 frei wählbar und auch kurzfristig neu einstellbar ist.

Die Hinterlegung und Parametrisierung der Soundelemente kann über beliebige Schnittstellen zur Steuer- bzw. Speichereinheit erfolgen, wobei sich insbesondere eine Datenbusanbindung als vorteilhaft erwiesen hat.

Die Steuereinheit 30 kann ferner mit einer Servicekomponente 40 verbindbar oder permanent mit dieser verbunden sein. Die Servicekomponente 40 kann dabei räumlich entfernt von der Steuereinheit 30 angeordnet oder auch direkt in die Steuereinheit 30 integriert sein, so dass sie in einer Ausführungsform der Erfindung auch in die Türsteuerung integriert sein kann. In der Servicekomponente 40 sind Zustandsinformationen zu den Türen des Fahrzeugs hinterlegt und jeder Zustandsinformation ist ein entsprechendes Soundelement in der Speichereinheit 31 zugeordnet. Vorzugsweise handelt es sich bei den Soundelementen um Sprachmitteilungen, die akustisch über die Lautsprecher 20, 20' ... 20ⁿ ausgegeben werden können.

Die Servicekomponente 40 erhält ihre Information über den Zustand der Türen beispielsweise über Sensoren und/oder den Ablauf bestimmter Wartungsintervalle. Wie bereits zuvor beschrieben, kann ein mit der Wartung des Fahrzeugs 10 beauftragter Servicetechniker so alle Türen abgehen und bekommt die jeweils zugehörige Zustandsinformation über einen Lautsprecher angesagt. Der Abruf kann beispielsweise gezielt durch ein mobiles Wartungsgerät 50 ausgelöst werden, das der Servicetechniker mit sich trägt und das Verbindung mit der Steuereinheit 30 aufnimmt. Dies kann beispielsweise über eine Funkverbindung erfolgen.

Es kann jedoch auch vorgesehen sein, dass der Servicetechniker über das Wartungsgerät 50 eine bestimmte Wartungsmaßnahme abruft und die Lautsprecher aller derjenigen Türen einen Ton abgeben, an denen diese bestimmte Wartungsmaßnahme fällig ist. Ferner kann vorgesehen sein, dass eine weitergehende Kommunikation und/oder ein Datenaustausch zwischen der Steuereinheit 30 und dem Wartungsgerät stattfindet. Dies kann jedoch auch zwischen dem Wartungsgerät und der Servicekomponente erfolgen.

Ferner kann auch eine einfachere Variante vorgesehen sein, bei welcher einem Servicetechniker völlig ohne Interaktion mit einem Wartungsgerät die entsprechenden Fehler- und Statusmeldungen für eine Tür über den zugehörigen Lautsprecher ausgegeben werden.

Die Integration eines Lautsprechers 20 in ein Bauteil des Fahrzeugs 10 erfolgt dabei erfindungsgemäß so, dass dieses Bauteil wenigstens bereichsweise als Resonanzkörper wirkt. Wird ein Lautsprecher 20 beispielsweise in ein Türblatt eingebaut, wie es das Ausführungsbeispiel der Fig. 1 vorsieht, wirkt somit wenigstens ein Türblech als Resonanzkörper, indem der Lautsprecher 20 Kontakt zu diesem Türblech hat. Vorzugsweise hat der Lautsprecher 20 jedoch Kontakt zu zwei gegenüber liegenden Türblechen, die das Türblatt bilden, so dass beide Bleche als Resonanzkörper wirken und ein Soundelement akustisch über beide Bleche angegeben werden kann.

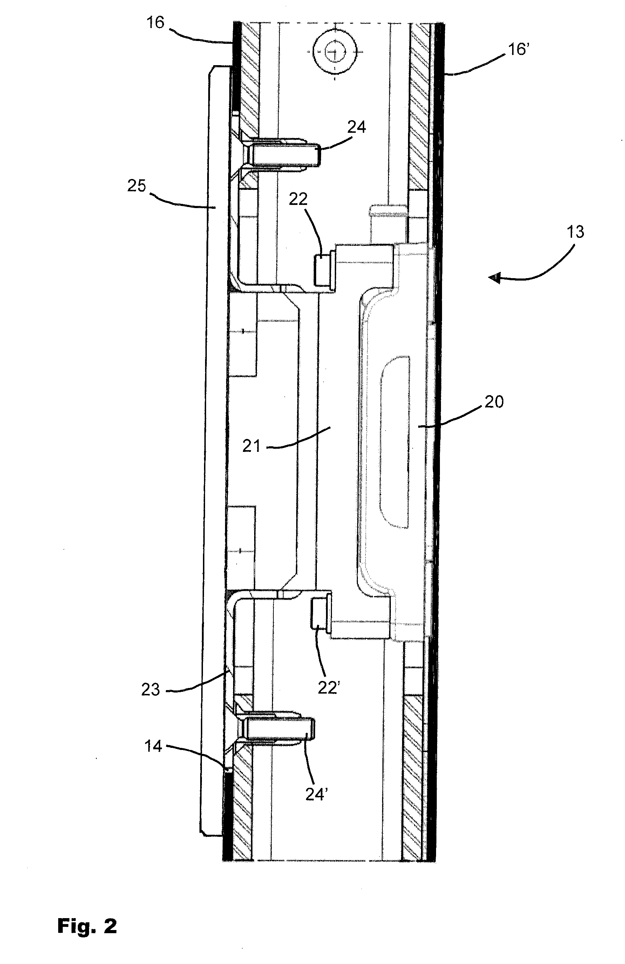

Fig. 2 zeigt eine mögliche Integration eines Lautsprechers 20 in ein Türblatt 13, wobei nur derjenige Teilbereich des Türblattes 13 gezeigt ist, in dem sich der Lautsprecher 20 befindet. Dabei wird das Türblatt 13 im Wesentlichen durch zwei voneinander beabstandete Türbleche 16 und 16' gebildet, wobei das linke Türblech 16 zur Innenseite des Fahrzeugs zeigt, während das rechte Türblech 16' zur Außenseite zeigt.

An dem äußeren Türblech 16' ist der Lautsprecher 20 angeordnet, wobei er von außen durch die Außenhaut des Türbleches 16' verdeckt wird. Von dieser Seite aus ist der Lautsprecher 20 somit vorzugsweise nicht sichtbar und auch nicht zugänglich, hat jedoch Kontakt zu dem äußeren Türblech 16', an dem er von innen anliegt. Dabei ist der Lautsprecher 20 über Befestigungen 22 und 22' in einer Aufnahme 21 montiert, wobei diese Befestigung in diesem Fall mittels Schraubverbindungen erfolgt ist. Es können jedoch auch beliebige andere Befestigungsmittel eingesetzt werden.

Das gegenüber liegende Türblech 16 weist eine Aussparung 14 auf, durch welche die Aufnahme 21 mit dem Lautsprecher 20 von links in das Türblatt 13 eingeschoben werden kann. Die Aufnahme 21 wiederum ist in ein Montagelement 23 eingebracht, das über weitere Schraubverbindungen 24 und 24' an dem gegenüber liegenden Türblech 16 montiert ist. Die gesamte Konstruktion ist von links mit einer Abdeckung bzw. einem Deckel 25 verschlossen. Der Deckel 25 liegt somit innen im Fahrzeug, so dass der Lautsprecher 20 von innen über die Aussparung 14 zugänglich ist, wenn der Deckel 25 demontiert wird.

Der Lautsprecher 20 hat Kontakt zu dem äußeren Türblech 16', so dass er den Türflügel 13 als Resonanzkörper nutzen kann. Es kann jedoch auch vorgesehen sein, dass der Lautsprecher 20 nach der Montage am äußeren Türblech 16' auch Kontakt zu dem inneren Türblech 16 hat. Dies kann beispielsweise über entsprechende Metallbrücken oder sonstige Verbindungs- bzw. Kopplungselemente realisiert werden. Hierzu können insbesondere Stege, Bleche, Streben, Stifte, Federn, etc. insbesondere aus Metall eingesetzt werden. Beispielsweise können an dem Lautsprecher 20 und/oder dem Montagelement 23 metallische Federelemente angebracht sein, welche bei der Montage des Montageelementes 23 bzw. des Deckels 25 den Lautsprecher 20 kontaktieren und so zusammengedrückt werden, dass sie unter Spannung zwischen dem Lautsprecher 20 und dem inneren Türblech 16 gespannt sind.

Die genannten Lösungen stellen jedoch nur einige der möglichen Ausführungsvarianten dar, auf welche die Erfindung nicht beschränkt ist. Beispielsweise kann der Aufbau der Fig. 2 auch umgedreht werden, so dass der Lautsprecher 20 am inneren Türblech anliegt und optional über Metallbrücken an das äußere Türblech 16 gekoppelt ist. Ferner kann ein Lautsprecher auch zwischen zwei Blechen einer Fahrzeugwand eingebracht werden und davon wenigstens ein Blech als Resonanzkörper nutzen.

### Bezugszeichenliste:

- 10: Fahrzeug, Schienenfahrzeug
- 11: Türbereich
- 12,12': Tür
- 13: Türblatt, Türflügel
- 14: Aussparung in Türblech
- 15,15': Drehsäule, Antrieb
- 16,16': Türblech
- 20,20',20ⁿ: Lautsprecher
- 21: Aufnahme
- 22,22': Befestigung Lautsprecher in Aufnahme, Schraubverbindung
- 23: Montageelement
- 24,24': Befestigung Aufnahme an Türblatt, Schraubverbindung
- 25: Deckel, Abdeckung
- 30: Steuereinheit, Türsteuerung
- 31: Speichereinheit
- 40: Servicekomponente
- 50: Wartungsgerät, Handheld

## Patentansprüche

1. Fahrzeug (10) zur öffentlichen Personenbeförderung, umfassend wenigstens einen Türbereich (11) mit einer beweglich angetriebenen Tür (12;12'),
**dadurch gekennzeichnet, dass** im Türbereich (11) wenigstens ein Lautsprecher (20;20';20") angebracht ist, der in Verbindung mit einer Steuereinheit (30) steht, wobei die Steuereinheit (30) zur akustischen Wiedergabe eines Soundelementes über den Lautsprecher (20;20';20ⁿ) ausgebildet ist und der Lautsprecher (20;20';20ⁿ) so in ein Bauteil des Fahrzeugs (10) integriert ist, dass das Bauteil bei der akustischen Wiedergabe eines Soundelementes durch den Lautsprecher (20;20';20ⁿ) wenigstens bereichsweise als Resonanzkörper wirkt.

2. Fahrzeug nach Anspruch 1,
**dadurch gekennzeichnet, dass** die Steuereinheit (30) Mittel zur Einstellung wenigstens eines Parameters für die akustische Wiedergabe des Soundelementes über den Lautsprecher (20;20';20ⁿ) aufweist.

3. Fahrzeug nach einem oder beiden der Ansprüche 1 und 2,
**dadurch gekennzeichnet, dass** die Steuereinheit (30) in die Türsteuerung der Tür (12; 12') integriert ist.

4. Fahrzeug nach einem oder mehreren der Ansprüche 1 bis 3,
**dadurch gekennzeichnet, dass** die Steuereinheit (30) in Verbindung mit einer Speichereinheit (31) steht, in der wenigstens ein Soundelement zur akustischen Wiedergabe über den Lautsprecher (20;20';20ⁿ) hinterlegt ist.

5. Fahrzeug nach einem oder mehreren der Ansprüche 1 bis 4,
**dadurch gekennzeichnet, dass** die Steuereinheit (30) Mittel zur Auswahl und/oder Erzeugung von wenigstens zwei unterschiedlichen Soundelementen für die akustische Wiedergabe über den Lautsprecher (20;20';20ⁿ) aufweist.

6. Fahrzeug nach den Ansprüchen 4 und 5,
**dadurch gekennzeichnet, dass** in der Speichereinheit (31) wenigstens zwei unterschiedliche Soundelemente hinterlegt sind, und die Steuereinheit (30) Mittel zur selektiven Auswahl eines Soundelementes für die akustische Wiedergabe über den Lautsprecher (20;20';20ⁿ) aufweist.

7. Fahrzeug nach einem oder beiden der Ansprüche 5 und 6,
**dadurch gekennzeichnet, dass** die Steuereinheit (30) zur selektiven Auswahl und/oder Erzeugung eines Soundelementes wenigstens in Abhängigkeit von Zustandssignalen der wenigstens einen Tür (12;12') ausgestaltet ist.

8. Fahrzeug nach einem oder mehreren der Ansprüche 1 bis 7,
**dadurch gekennzeichnet, dass** das Soundelement ein Ton, eine Tonfolge und/oder eine Sprachmitteilung ist.

9. Fahrzeug nach einem oder mehreren der Ansprüche 1 bis 8,
**dadurch gekennzeichnet, dass** der Lautsprecher (20;20';20ⁿ) in ein Türblatt (13) der wenigstens einen Tür (12;12'), in eine Wand des Fahrzeugs (10), in eine Voutenklappe, in eine Türsteuerung oder in einen Antrieb der Tür (12;12') integriert ist.

10. Fahrzeug nach Anspruch 9,
**dadurch gekennzeichnet, dass** der Lautsprecher (20;20';20ⁿ) nicht sichtbar in ein Türblatt (13) oder eine Wand des Fahrzeugs (10) integriert ist.

11. Fahrzeug nach einem oder beiden der Ansprüche 9 und 10,
**dadurch gekennzeichnet, dass** der Lautsprecher (20;20';20ⁿ) in ein Türblatt (13) integriert ist, wobei das Türblatt (13) zwei voneinander beabstandete Türbleche (14:14') aufweist, zwischen denen der Lautsprecher (20;20';20ⁿ) so angebracht ist, dass der Lautsprecher (20;20';20ⁿ) direkten Kontakt zu wenigstens einem Türblech (14;14'), insbesondere zu beiden Türblechen (14; 14') hat.

12. Fahrzeug nach einem oder mehreren der Ansprüche 1 bis 11,
**dadurch gekennzeichnet, dass** die Steuereinheit (30) mit einer Servicekomponente (40) verbindbar ist, in welcher wenigstens Informationen über den Zustand einer Tür (12;12') vorliegen, und dass die Steuereinheit (30) Mittel zur selektiven Auswahl und/oder Erzeugung eines Soundelementes für die akustische Wiedergabe über den Lautsprecher (20;20';20ⁿ) in Abhängigkeit von diesen Zustandsinformationen aufweist.

13. Fahrzeug nach einem oder mehreren der Ansprüche 1 bis 12,
**dadurch gekennzeichnet, dass** das Fahrzeug (10) mehrere Lautsprecher (20;20';20ⁿ) aufweist, die in einem jeweiligen Türbereich angeordnet sind, wobei die Lautsprecher (20;20';20ⁿ) in Verbindung mit der Steuereinheit (30) stehen, und die Steuereinheit (30) Mittel zur selektiven Ansteuerung der einzelnen Lautsprecher (20;20';20ⁿ) aufweist.

14. Fahrzeug nach den Ansprüchen 12 und 13,
**dadurch gekennzeichnet, dass** die Steuereinheit (30) Mittel zur selektiven Wiedergabe eines Soundelementes über den Lautsprecher (20;20';20ⁿ) im Türbereich (11) derjenigen Tür (12;12') aufweist, deren Zustandsinformationen bei der Auswahl des Soundelementes verwendet wurden.

15. Fahrzeug nach einem oder mehreren der Ansprüche 1 bis 14,
**dadurch gekennzeichnet, dass** die akustische Wiedergabe eines Soundelementes über wenigstens einen Lautsprecher (20;20';20ⁿ) manuell und/oder automatisiert durch ein von dem Fahrzeug (10) erzeugtes Zustandssignal auslösbar ist.
